# FASCICULE DE BREVET EUROPEEN

(11) **EP 3 861 432 B1**
(45) Date de publication et mention de la délivrance du brevet: **11.12.2024**
(21) Numéro de dépôt: 19801961.4
(22) Date de dépôt: 04.10.2019
(51) Int. Cl.: G06F 8/54, G06F 9/445, G06F 9/448

(54) **PROCÉDÉ POUR GÉNÉRER UNE LIAISON ENTRE UNE BIBLIOTHÈQUE C/C++ ET UN LANGAGE INTERPRÉTÉ, ET MISE EN OEUVRE DE CE PROCÉDÉ POUR LA TRANSFORMATION D'UN MODÈLE TRIDIMENSIONNEL (3D)**
VERFAHREN ZUR ERZEUGUNG EINER BINDUNG ZWISCHEN EINER C/C++ BIBLIOTHEK UND EINER INTERPRETIERTEN SPRACHE UND DURCHFÜHRUNG DES VERFAHRENS ZUR TRANSFORMATION EINES DREIDIMENSIONALEN (3D) MODELLS
METHOD FOR GENERATING A BINDING BETWEEN A C/C++ LIBRARY AND AN INTERPRETED LANGUAGE, AND CARRYING OUT SAID METHOD TO TRANSFORM A THREE-DIMENSIONAL (3D) MODEL

(30) Priorité: 04.10.2018 FR 1859224
(43) Date de publication de la demande: 11.08.2021
(73) Titulaire: Movida Production, 45000 Orléans (FR)
(72) Inventeur: JULIEN, Emmanuel, 45000 ORLEANS (FR); GUTHERZ, François, 45000 ORLEANS (FR)
(74) Mandataire: IP Trust
(86) Numéro de dépôt international: PCT/FR2019/052362
(87) Numéro de publication internationale: WO 2020/070458

(56) Documents cités:
- BEAZLEY D M ED - GIL DAVID ET AL: "Automated scientific software scripting with SWIG", FUTURE GENERATIONS COMPUTER SYSTEMS, vol. 19, no. 5, July 2003 (2003-07-01), pages 599 - 609, XP085640847, ISSN: 0167-739X, DOI: 10.1016/S0167-739X(02)00171-1
- PIERRE FERNIQUE ET AL: "AutoWIG: Automatic Generation of Python Bindings for C++ Libraries", ARXIV.ORG, CORNELL UNIVERSITY LIBRARY, 201 OLIN LIBRARY CORNELL UNIVERSITY ITHACA, NY 14853, 31 May 2017 (2017-05-31), XP080950591

## Description

### Domaine de l'invention

La présente invention concerne un procédé pour générer une liaison (*binding*) entre une bibliothèque C/C++ et un langage interprété.

Elle vise également une mise en oeuvre de ce procédé de génération de liaison pour la transformation d'un modèle tridimensionnel (3D), notamment pour être embarquable dans une interface humain-machine d'un équipement mobile.

Le domaine de l'invention est celui des interfaces humain-machine, et plus particulièrement des interfaces humain-machine embarqués dans des systèmes de mobilité, terrestres, aériens ou maritimes.

### Etat de la technique

Un générateur de binding est un outil qui permet de réaliser efficacement la liaison ("binding") entre une bibliothèque C/C++ et un langage interprété. L'enjeu du binding consiste à donner accès au couple fonctionnalité/performance d'un langage bas-niveau (le C++) depuis un langage haut-niveau (Python, Java, C#, Haskell...)

Généralement, les langages haut niveau ont des performances inférieures aux langages bas niveau. Ils sont moins rapides et/ou consomment plus de mémoire. En contrepartie, les langages haut niveau libèrent les développeurs de nombreuses tâches, dont la gestion de la mémoire, notamment créer des objets, les détruire.

Les langages haut niveaux sont considérés comme plus accessibles. Ils permettent d'atteindre plus vite un résultat fonctionnel, ce qui leur confère une place idéale dans la phase de prototypage rapide. La question des performances les exclut cependant de la phase d'industrialisation. Le besoin est donc d'avoir à la fois la performance du C++ et l'accessibilité des langages haut niveau.

Cette problématique se retrouve dans la gestion de projet, en particulier lors de la conception d'une interface humain-machine, qui nécessite l'apport conjoint d'ingénieurs hardware utilisant les langages bas-niveau et d'experts métiers utilisant les langages hauts-niveau. La difficulté est d'organiser une méthodologie qui soit la synthèse de compétences aussi diverses qu'antagonistes.

En particulier, dans la production d'une application interactive à contenu 3D, un des enjeux principaux est de "traduire" (convertir) les modèles 3D issus d'une application de CAO dans le format propriétaire du moteur 3D dans lequel est développé l'application. Cette tâche complexe se trouve à l'intersection des compétences citées en amont. Les experts métiers ont la connaissance des objectifs fonctionnels et esthétiques à atteindre, mais leur périmètre technique ne les autorise pas à agir dans la phase d'industrialisation. De l'autre côté du spectre, les ingénieurs bas-niveau disposent des compétences techniques dans le traitement et l'affichage des données 3D sur plateforme industrielle, mais n'ont pas le bagage nécessaire à une conversion/traduction des données 3D qui soit conforme aux objectifs des experts métiers. Il existe donc un fossé entre ces métiers qui interdit la réalisation d'interfaces humain-machine conforment aux objectifs fonctionnels, esthétique et aux spécifications techniques imposés par le hardware industriel.

La conversion/traduction occasionne toujours une perte d'information, et le modèle 3D CAO ne contient pas les attributs de "matériaux" nécessaires au rendu en 3D.
Le palliatif pour combler le fossé évoqué ci-dessus consiste à faire des réglages, une fois la traduction réalisée. C'est l'approche choisie par des solutions comme Unreal Engine et Unity 3D qui consiste à accumuler des moyens humains et la main d'oeuvre, en particulier à l'approche de la fin du projet. Cette pratique, s'il est admis qu'elle fonctionne dans l'industrie du divertissement, n'est pas adaptée au secteur industriel.

On constate ainsi qu'il n'existe pas de solution pour réaliser la liaison entre des langages haut-niveau et bas niveau et par corolaire de rendre possible la synthèse d'équipes pluridisciplinaire au sein de projet d'IHM industrielles.

Par ailleurs, il existe actuellement une forte demande, exprimée notamment par les constructeurs automobiles, pour des interfaces humain-machine (IHM) ergonomiques, efficaces et hautement dynamiques.

En l'état de l'art, SWIG est un programme permettant de générer de tels "bindings". Il est open-source, libre d'accès et permet de relier des programmes écrits en C/C++ à une variété de langages de programmation de « haut niveau ». Parmi les langages cibles, on trouve des langages de script courants tels que Javascript, Perl, PHP, Python, Tcl et Ruby. SWIG souffre d'une dette technique trop importante et d'un traitement inégal des langages cibles supportés. Ainsi, il est fréquent qu'une fonctionnalité désirable ne soit supportée que dans quelques langages cibles et parfois dans aucun, ce qui constitue un handicap important pour l'intégration de scripts experts dans un processus de conformation de modèles 3D automatisé.

En outre, s'il propose d'automatiser intégralement la génération du *binding,* en pratique on constate que les projets utilisant SWIG demandent une intervention explicite du développeur afin de corriger le code non-fonctionnel généré automatiquement. Le paradoxe est ainsi atteint lorsque la quantité de code écrit pour corriger le code généré erroné est largement supérieure à ce qui serait raisonnablement envisagé pour atteindre le niveau attendu de fonctionnalité du *binding.*

De plus, dans le cadre d'un projet réalisé par une équipe pluridisciplinaire, l'accès à une documentation claire et synthétique par des experts métiers est une condition absolue à l'accomplissement des objectifs. SWIG, depuis l'avènement de la version 2.0, n'offre plus cette fonctionnalité. Si le *binding* généré donne bien accès à des fonctionnalités bas-niveau depuis un langage haut-niveau, les experts métiers et en capacité de produire du code haut-niveau n'ont aucun support de documentation et de référence de l'API exposée.

Le document US5083262A décrit un procédé de liaison de langage (« *langage binding »)* destiné à des fonctions graphiques, avec pour objectif de permettre à un programme d'application d'être utilisé dans différents environnements de traitement.

L'établissement d'une liaison spécifique à une langue entre des programmes d'application graphique de haut niveau écrits dans un langage de programmation spécifique permet de transporter un programme d'application graphique entre et utilisé dans différents systèmes de traitement graphique. Un seul programme d'application graphique portable peut être utilisé avec n'importe lequel des processeurs graphiques avec lesquels une liaison de langage d'application a été établie pour produire des graphiques sur un périphérique de sortie.

Le document CN101814024A divulgue un outil de conception d'une interface 3D multiplateforme, principalement utilisé pour développer des interfaces interactives homme-machine 3D grand écran. L'outil comprend un noyau système capable d'invoquer des fonctions systémiques de manière multi-plateformes, dans lequel le noyau prend en charge les fonctions principales d'une plateforme grand public actuelle et peut effectuer une auto-vérification pour trouver la différence entre les fonctions système de différents systèmes d'exploitation.

La combinaison de l'héritage technologique de SWIG et de son support fragmenté des fonctionnalités du C++ fait qu'il est extrêmement compliqué et coûteux d'assurer son évolution et sa maintenance. Les alternatives logicielles, peu nombreuses, à SWIG ne s'intéressent en général qu'à un seul langage cible tout en étant beaucoup plus limitées que ce dernier en termes de fonctionnalités C++ supportées.

De plus, avec l'arrivée du nouveau standard C++ (C++11), les nouvelles constructions du langage sont peu ou pas supportées et de nombreuses configurations d'utilisation des nouvelles fonctionnalités C++ ne sont pas correctement supportées par SWIG.

En l'absence de solution, dans bon nombre de centres de conception et de développement d'interfaces humain-machine, on réécrit le code d'un modèle 3D généré par un outil CAD pour pouvoir l'embarquer sur une plateforme mobile. L'utilisation d'un format spécifique hérité de l'environnement de la CAD pour le stockage de données 3D adaptées aux contraintes de l'embarqué pose le problème de la versatilité et de la souplesse pour faire face aux contraintes d'un environnement embarqué.

Le document « Automated scientific software scripting with SWIG" de D.M. Beazley dans la revue Future Generations Computer Systems 19 (2003) pages 599-609, divulgue un procédé pour générer une liaison (binding) entre une bibliothèque C/C++ et un ou plusieurs langages interprétés haut niveau, en vue d'exposer les fonctionnalités de cette bibliothèque C/C++ à ce langage interprété ; comprenant une étape pour écrire une définition de cette liaison ou binding sous forme d'un langage de haut niveau, une étape pour traiter cette définition de façon à produire des éléments de binding et une étape pour compiler le code C++ et le relier à la bibliothèque C/C++.

Le document « AutoWIG : Automatic Génération of Python Bindings for C++ Libraries » de P. Fernique et al, XP080950591, divulgue un procédé de génération automatique de liaison pour des bibliothèques C++.

Le but de la présente invention est de proposer un procédé de génération de liaisons (« binding »), qui permette d'allier aux performances d'une bibliothèque 3D en C++, la souplesse d'un langage haut niveau sur du matériel embarqué.

### Résumé de l'invention

L'invention est exposée dans les revendications annexées. Cet objectif est atteint avec un procédé pour générer un binding (liaison) entre une bibliothèque C/C++ (A) et un environnement logiciel d'un ou plusieurs langages interprétés haut niveau, en vue d'exposer les fonctionnalités de ladite bibliothèque C/C++ audit langage interprété, comprenant les étapes suivantes, implémentées par ordinateur :
- une étape pour traiter une définition de la liaison ou binding (C), ladite définition ayant été préalablement écrite en langage haut niveau et comprenant une liste de fonctions, de façon à produire des éléments de binding,
- une étape pour générer une liste des éléments de binding exposés vers des langages haut niveau, de façon à produire un jeu de fonctions en C++ qui sont exposées vers le ou les langages de haut niveau,
- une étape pour compiler ledit code C++ (D) et le relier (linker) à ladite bibliothèque C/C++ (A), caractérisé en ce que l'étape de génération de binding est en outre configurée pour permettre à la bibliothèque C/C++ d'appeler une fonction écrite en langage haut niveau (callback), de façon à en étendre les fonctionnalités.

La définition du binding peut aussi comprendre une liste de fonctions, des paramètres attendus pour lesdites fonctions, et des valeurs retournées.

Dans une version particulière de l'invention, l'étape de traitement de définition comprend une répartition du traitement entre :
- des fonctionnalités de chacun du ou desdits langage haut-niveau [B],.
- des fonctionnalités du langage C++ qui sont supportées de façon transparente par le binding et seront rendues accessibles dans le langage haut-niveau.

Le procédé de liaison selon l'invention peut aussi avantageusement comprendre une étape pour traiter une documentation attachée à la bibliothèque C/C++ (A) comme un langage haut niveau cible (B2) et générer un fichier XML.

Ce procédé peut en outre comprendre, à la suite de l'étape de compilation, une obtention d'une bibliothèque dynamique (E) intégrant la bibliothèque C/C++ (A) et une couche d'interface compilée à partir du code C++ (A) issu de l'étape de compilation, et d'une bibliothèque statique (E) prévue pour embarquer le ou les langages interprétés haut niveau directement dans le code C++ issu de l'état de compilation.

Suivant un autre aspect de l'invention, il est proposé un module informatique implémentant le procédé de binding selon l'une quelconque des revendications précédentes, opérant avec une bibliothèque C/C++ (A) et un ou plusieurs langages interprétés haut niveau, en vue d'exposer les fonctionnalités de ladite bibliothèque C/C++ audit langage interprété, comprenant:
- des moyens pour traiter une définition de la liaison ou binding, préalablement écrite en langage haut niveau et comprenant une liste de fonctions, de façon à produire des éléments de binding,
- des moyens pour rassembler lesdits éléments de binding vers chacun du ou desdits langages haut niveau, de façon à produire un code C++ (D) de binding,
- des moyens pour générer une liste des éléments de binding exposés vers des langages haut niveau, de façon à produire un jeu de fonctions en C++ qui sont exposées vers le ou les langages de haut niveau,
- des moyens pour compiler ledit code C++ (D) et le relier (linker) à ladite bibliothèque C/C++ (A),

Suivant l'invention, les moyens de génération de binding sont en outre configurés pour permettre à la bibliothèque C/C++ d'appeler une fonction écrite en langage haut niveau (callback), de façon à en étendre les fonctionnalités.

Suivant encore un autre aspect de l'invention, il est proposé une mise en oeuvre du procédé de liaison ou binding selon l'invention dans un procédé de transformation d'un modèle 3D provenant d'une bibliothèque C/C++ (A) en vue d'être embarquable dans un équipement, dans laquelle une application dite de métier est écrite dans un langage haut niveau (B) en important une bibliothèque dynamique (E) et en accédant à travers ladite bibliothèque dynamique (E) aux fonctionnalités de ladite bibliothèque C/C++ (A).

Cette mise en oeuvre du procédé de liaison ou binding selon l'invention peut en particulier concerner la transformation de modèles 3D provenant d'une bibliothèque C/C++ (A) en des modèles 3D adaptés pour être embarqués dans des équipements au sein de systèmes de mobilité.

Dans le procédé de liaison selon l'invention, on implémente des règles de traduction, basées sur les besoins de chaque projet, pour que la traduction donne automatiquement le résultat optimal une fois les modèles 3D basculés dans le moteur 3D. Pour que l'écriture de ces règles soient accessible à l'homme de l'art ("graphiste/intégrateur"), il est inconcevable de devoir les implémenter en C++.

Le procédé de liaison selon l'invention peut en particulier prendre en compte le langage *Lua* qui est un langage de script libre bien connu des concepteurs de modèles 3D. ce qui permet d'écrire les règles de traduction en *Lua.*

On tire parti du générateur de liaison selon l'invention pour intégrer facilement le langage *Lua* au sein de tous les outils d'un système de transformation de modèles 3.

Le procédé de liaison selon l'invention propose ainsi au développeur de décrire de façon simple l'interface « haut niveau » dont il a besoin et se charge de produire automatiquement le code C++ de liaison ainsi que les mécanismes de gestion des ressources.

Le procédé générateur selon l'invention donne au développeur en charge du binding la possibilité d'implémenter les fonctionnalités des langages cibles, langage par langage. Le développeur précise ainsi ce qui est exposé explicitement, à la différence de SWIG qui tente, mais à échoue, à tout exposer implicitement)

Avec une seule description, le générateur de liaison selon l'invention fabrique automatiquement tous les *bindings* vers les langages supportés. L'ajout du support d'un langage bénéficie donc à tous les projets déjà reliés.

La traduction d'une application métier depuis un langage cible vers un autre langage cible est quasiment directe et automatisable, les API (pour *« Application Programming Interface »)* générées par le générateur de binding étant strictement identiques.

La documentation est considérée comme un langage cible à part entière.

Le générateur de liaison selon l'invention prend en charge la conversion des types C++ (STD et STL), et donne accès aux fonctionnalités du C++ moderne. Ce générateur permet d'exposer les types des objets spécifiques à la bibliothèque dans un débogueur du langage cible

Dans un langage haut-niveau, toutes les données sont encapsulées avec une métadonnée associée. Par souci d'efficience dans l'occupation de la mémoire vive, ces langages offrent la possibilité de stocker la donnée directement au sein de la métadonnée. Ce mécanisme est rendu accessible par le générateur de liaison selon l'invention. Le bénéfice direct ainsi obtenu est un gain en performance, en place mémoire et en complexité (exemple : entiers, flottants, vecteurs...)

On veut pouvoir appeler une fonction C++ depuis Python ou *Lua,* mais on veut aussi pouvoir appeler une fonction Python ou *Lua* depuis C++. Le générateur selon l'invention implémente ce mécanisme uniformément dans tous les langages supportés. Il donne la possibilité à un homme de l'art d'étendre les fonctionnalités du C++ sans avoir à en connaître le détail d'implémentation.

On peut citer à titre d'exemple une implémentation d'un effet optique sur l'image qui nécessite de pouvoir s'intercaler précisément au coeur d'une pipeline de rendu d'image, avec un callback d'un module finaliseur, et un callback depuis un moteur physique temps-réel. Le binding généré peut être utilisé via une bibliothèque dynamique (DLL) ou une bibliothèque statique (intégré au binaire).

Cette souplesse permet par exemple d'intégrer le langage *Lua* à la bibliothèque d'affichage et de manipulation de modèles 3D, sans impact sur les performances ou l'occupation mémoire et conduit au paradoxe apparent de pouvoir importer *Lua* dans *Lua,* ce qui contribue à offrir des capacités multi-core à des développeurs non C++. De même, *Lua* est accessible à tous les développeurs Python.

### Description détaillée de l'invention

D'autres avantages et particularités de l'invention apparaîtront à la lecture de la description détaillée de mises en oeuvre et de modes de réalisation nullement limitatifs, et des dessins annexés suivants :
- la figure 1 est un schéma synoptique d'un exemple de réalisation d'un générateur de liaison ou binding selon l'invention ;
- la figure 2 décrit schématiquement un processus finaliseur (ou « Finalizer ») mettant en oeuvre le procédé de liaison selon l'invention ;
- la figure 3 décrit schématiquement une application métier mettant en oeuvre le procédé de liaison selon l'invention ;
- la figure 4 est un schéma synoptique d'un processus global de transformation mettant en oeuvre le procédé de liaison selon l'invention ;
- la figure 5 décrit schématiquement un moteur graphique embarqué implémentant le procédé de liaison selon l'invention ; et
- la figure 6 illustre un exemple particulier de mise en oeuvre du procédé de liaison selon l'invention dans une configuration multi-utilisateurs.

### Exemple de réalisation

Ces modes de réalisation étant nullement limitatifs, on pourra notamment considérer des variantes de l'invention ne comprenant qu'une sélection de caractéristiques décrites ou illustrées par la suite isolées des autres caractéristiques décrites ou illustrées (même si cette sélection est isolée au sein d'une phase comprenant ces autres caractéristiques), si cette sélection de caractéristiques est suffisante pour conférer un avantage technique ou pour différencier l'invention par rapport à l'état de la technique antérieure. Cette sélection comprend au moins une caractéristique de préférence fonctionnelle sans détails structurels, et/ou avec seulement une partie des détails structurels si cette partie uniquement est suffisante pour conférer un avantage technique ou à différencier l'invention par rapport à l'état de la technique antérieure.

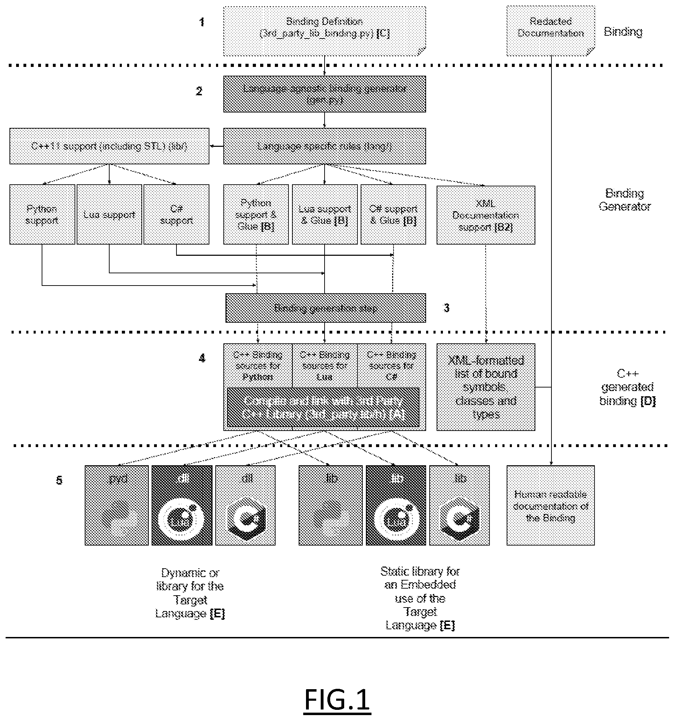

On va maintenant décrire, en référence à la figure 1, un exemple de réalisation d'un procédé de génération de liaison *(ou binding)* selon l'invention.

**Etape 1.** L'utilisateur du générateur de liaison selon l'invention est en possession d'une librairie tierce C ou C++ [A] dont il souhaite exposer les fonctionnalités à un langage [B] tel que Python, *Lua* ou C#.

L'utilisateur écrit la définition du binding sous la forme d'un programme Python [C] utilisant l'API du générateur de liaison ou binding (lui-même écrit en Python) qui décrit l'API de la librairie [A] telle qu'elle doit être exposée aux développeurs du langage haut-niveau, par une liste de fonctions ainsi que leurs paramètres attendus et les valeurs retournées.

**Etape 2.** La définition du binding [C], qui ne dépend d'aucune spécificité du langage haut-niveau, est traitée par le générateur de binding qui répartit le traitement entre :
- les fonctionnalités de chaque langage haut-niveau [B] (gestion des données, de leur durée de vie, passage des données entre C++ et langage haut-niveau, paradigmes spécifiques).
- les fonctionnalités du C++ qui sont supportées de façon transparente par le binding et seront rendues accessibles dans le langage haut-niveau (types STL/STD)

En parallèle, la documentation est traitée comme un langage haut-niveau cible [B2] et génère un fichier XML.

**Etape 3.** La dernière étape du générateur de binding rassemble les éléments de binding vers chaque langage haut-niveau pour produire le code C++ [D] de binding.

**Etape 4.** Le code C++ produit [D] en sortie du générateur a vocation à être compilé et linké à la bibliothèque tierce dont on expose les fonctionnalités.

En parallèle, la liste des symboles du binding peut être augmentée de la documentation rédigée à l'étape 1, produisant ainsi une référence intelligible et plus accessible qu'une documentation *Doxygen* qui est l'état de l'art d'une documentation C++ générée automatiquement.

**Etape 5.** Le résultat de la compilation de [D] est, au choix :
- une librairie dynamique [E]. La librairie [E] intègre la librairie [A] ainsi que la couche d'interface compilée à partir de [D]
- une librairie statique pour embarquer Python/Lua etc directement dans le programme C++ final.

L'étape finale est l'utilisation de ce binding. L'utilisateur écrit une application "métier" en langage [B] en important la librairie dynamique [E] et en accédant à travers celle-ci aux fonctionnalités de la librairie [A].

Le générateur de liaison selon l'invention donne au développeur en charge du binding la possibilité d'implémenter les fonctionnalités des langages cibles, langage par langage. Le développeur précise ce qui est exposé explicitement, à la différence de SWIG qui tente, mais à échoue, à tout exposer implicitement.

Avec une seule description, le générateur de liaison selon l'invention fabrique automatiquement tous les bindings vers les langages supportés. L'ajout du support d'un langage bénéficie donc à tous les projets déjà reliés.

La traduction d'une application métier depuis un langage cible vers un autre langage cible est quasiment directe et automatisable, les API générées par le générateur de binding étant strictement identiques, Ce qui augmente encore plus la portabilité des projets développés en C++, le langage cible choisi au début du projet n'étant plus un point de blocage.

Par ailleurs, le générateur de liaison selon l'invention prend en charge la conversion des types C++ (STD et STL), et donne accès aux fonctionnalités du C++ moderne. Il permet d'exposer les types des objets spécifiques à la bibliothèque dans un débogueur du langage cible.

Le binding généré peut être utilisé via une bibliothèque dynamique (DLL) ou une bibliothèque statique (intégré au binaire). Cette souplesse nous permet par exemple d'integrer *Lua* à une bibliothèque de modèles 3D sans impact sur les performances ou l'occupation mémoire.

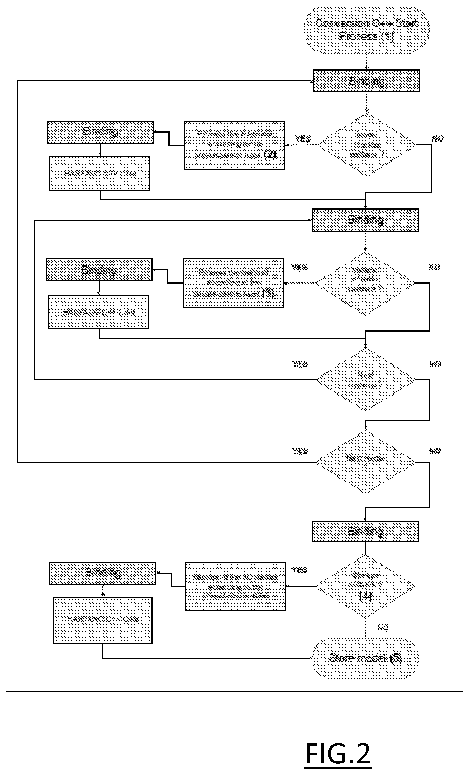

On va maintenant décrire, en référence à la figure 2, comment des opérations de binding (ou liaison) sont mise en oeuvre dans un processus de conversion de modèle impliquant un module dit finaliseur.
1. La traduction d'un modèle 3D provenant d'une bibliothèque C/C++ invoque automatiquement un module finaliseur. Par un système de *callbacks,* l'interpréteur, qui fonctionne en parallèle de la traduction, invoque un jeu de fonctions implémentées par un homme de l'art, projet par projet, et qui détaillent les transformations à apporter pour que les modèles 3D envoyés par l'équipement embarqué soient conformes aux attendus des designers.
2. Si le module finaliseur a reçu comme instructions d'intervenir sur la transformation du modèle 3D, il a la possibilité de modifier la morphologie du modèle 3D, sa densité, son orientation, etc. Toutes ces transformations doivent avoir pour but de rendre le modèle 3D compatible et optimisé pour l'équipement embarqué. Cette modification se fait via un rappel (*callback*) qui fait exécuter une suite d'instruction par l'interpréteur.
3. Si le Finaliseur a reçu comme instructions d'intervenir sur la transformation des matériaux, il a la possibilité de les redéfinir entièrement, de les factoriser, de leur assigner des algorithmes de traitement de la lumière et des matières (ou *shaders*), de convertir les flux d'images avec pour but de rendre les données compatibles et optimisées pour l'équipement embarqué. Cette modification se fait via un rappel (« *callback* ») qui fait exécuter une suite d'instruction par l'interpréteur
4. Le module finaliseur est invoqué autant de fois qu'un modèle 3D ou des matériaux sont traités par l'outil de développement 3D en langage haut niveau.
5. Au moment du stockage du modèle 3D, le module finaliseur peut choisir le format le plus adapté à l'équipement embarqué (binaire, XML, Json, etc).

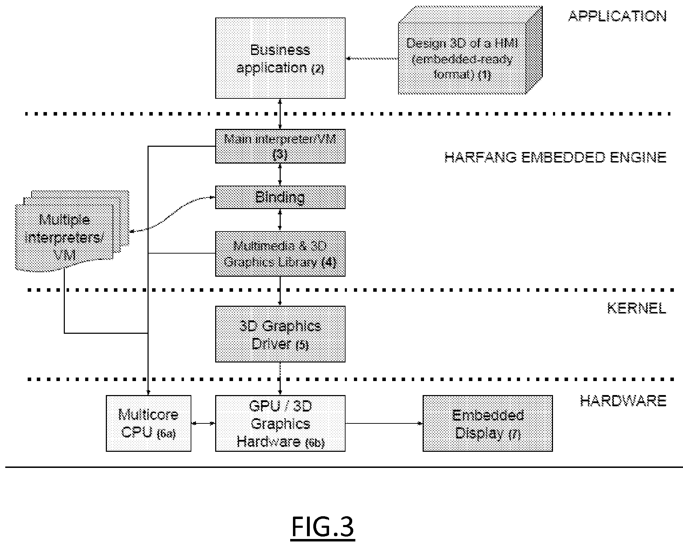

On va maintenant décrire, en référence à la figure 3, comment un procédé de liaison ou binding selon l'invention est implémenté dans un processus de transformation d'un modèle 3D issu d'un outil de développement en un modèle embarqué dans un équipement doté d'une interface humain-machine.
1. On considère une interface humain-machine conçue par un designer et traitée par l'outil de développement 3D pour être embarquable,
2. Une application métier (business application) donne à l'utilisateur de l'équipement embarqué des fonctionnalités métier,
3. Un Interpréteur du langage interprété fait fonctionner l'application métier et exploite les fonctionnalités de la bibliothèque C++,
4. Une bibliothèque C++ expose, via une APl, des fonctionnalités 3D, vidéo et audio,
5. Un pilote graphique 3D expose, via une API (OpenGL), les capacités d'un processeur graphique GPU et transforme les instructions données en primitives GPU,
6. Le processeur graphique GPU 3D, traite les primitives GPU et les transforme en signaux vidéo,
7. L'écran de l'équipement embarqué affiche le signal vidéo transmis par le GPU et donc l'IHM (1).

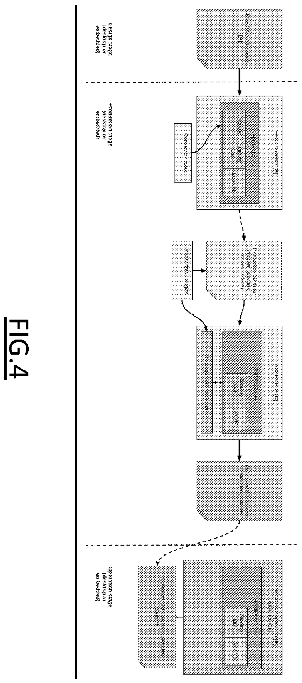

On va maintenant décrire, en référence à la figure 4, le rôle joué par le procédé de liaison ou binding selon l'invention, aux différentes phases de design, de production et d'opération.

En phase de design, réalisée sur un ordinateur ou en embarqué, on manipule des modèles 3D (A) issus directement d'outils CAD (ou CAO).

En phase de production, réalisée aussi sur un ordinateur ou en embarqué, les modèles 3D sont soumis en entrée d'un convertisseur FXB incluant un programme écrit en C++ et intégrant un module finaliseur, un module de liaison Lua et une machine virtuelle Lua. Le module finaliseur exécute des règles de conversion. Les résultats du convertisseur FXB sont des données 3D de production incluant des modèles, des algorithmes de type « shader », des images et des vidéos. Ces résultats sont accessibles via de scripts utilisateur et des modules « plug-in ». Ils ont appliqués en entrée d'un outil de développement 3D visuel incluant un programme écrit en C++ et incluant un module de liaison Lua et une machine virtuelle VM Lua. Ce programme en C++ est contrôlé par un programme de liaison Lua. En sortie de ce programme C++, on dispose de données 3D optimisées adaptées pour des plateformes embarquées 3D optimisées.

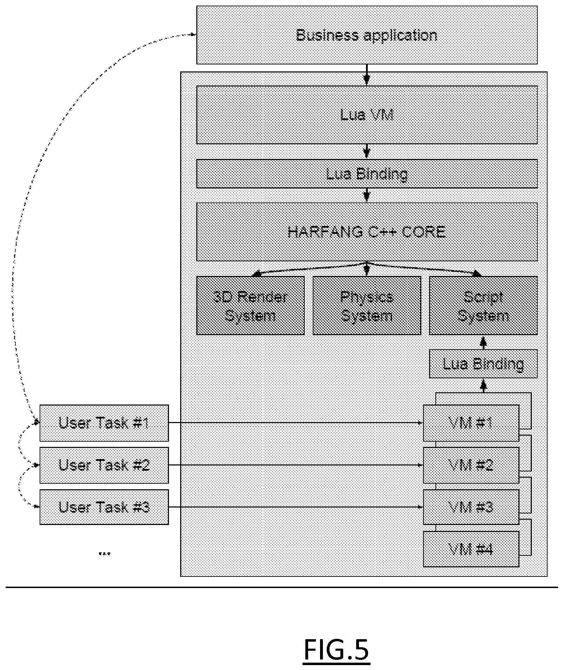

On va maintenant décrire, en référence à la figure 5, un exemple de structure d'un moteur embarqué mettant en oeuvre le procédé de liaison ou binding selon l'invention. Ce moteur embarqué reçoit en entrée une application métier. Il inclut une machine virtuelle Lua dont les livrables sont embarqués dans une machine virtuelle VM dont la sortie est reliée en entrée d'un module de liaison Lua qui nourrit l'entrée d'un coeur C++ dédié. Ce coeur C++ génère un système de rendu 3D, un système physique et un système de script.

Ce module embarqué contient aussi un ensemble de machines virtuelles VM1-4 associées pour certaines d'entre elles à des taches utilisateurs. Ces machines virtuelles sont également connectées au module de liaison Lua.

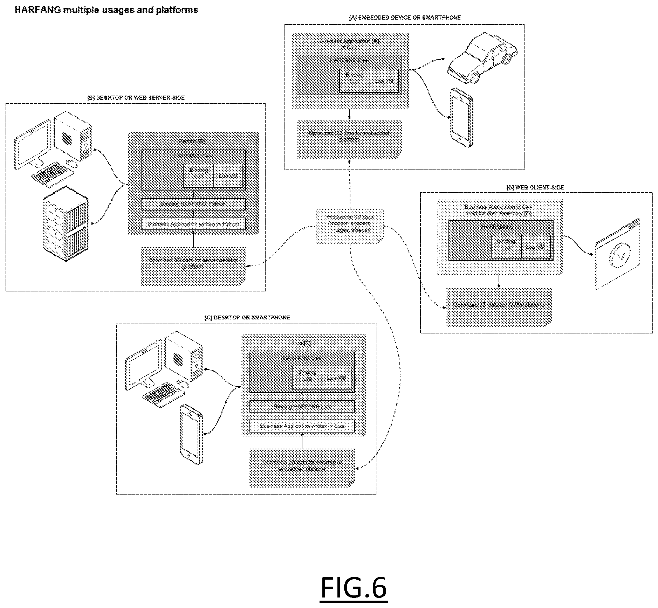

En référence à la figure 6, le procédé de liaison ou binding selon l'invention peut être mis en oeuvre dans un environnement multi-plateformes et multi-usages :

### Dispositif embarqué ou smartphones :

Le procédé de liaison selon l'invention peut être embarqué dans un véhicule ou dans un smartphone. Dans ce cas d'usage, on utilise une API C+ et l'application métier est implémentée en C++. Cependant, grâce au binding, l'outil de développement 3D intègre tout de même une machine virtuelle *Lua* qui sait exécuter des micro scripts (voire des scripts plus complexe), qui utilisés généralement pour mettre en mouvement des éléments visuels.
a. Smartphone
   Application utilisant la 3D temps réel, de façon intensive ou mixée avec d'autres éléments, comme une visualisation d'objets 3D en réalité augmentée.
b. Automobile
   Application utilisant la 3D temps réel de façon intensive pour remplacer tout ou partie d'un équipement physique (infotainment, cluster, etc)

### Ordinateurs ou applications web

Le procédé de binding selon l'invention, qui offre une passerelle directe vers Python, autorise le développement rapide d'application 3D complexes sans nécessiter de connaissances pointues dans les API 3D temps réel bas niveau.

Si toute l'application métier est écrite en Python, l'utilisation de *Lua* en parallèle est possible/recommandée, selon la nature des tâches et les performances attendues.
a. Desktop
   Ecrite en Python, l'application est avantageusement portable sur toutes les plateformes de référence (Windows, OS X, Linux). C'est le format idéal pour développer des applications métier exécutées directement sur un poste de travail conventionnel
b. Serveur
   La modularité et la portabilité du couple moteur 3D C++/application métier Python offrent la possibilité de le faire fonction en mode "render less", c'est à dire en désactivant le générateur d'image. On obtient le paradoxe d'un moteur d'imagerie 3D temps réel qui calcule des images 3D temps réel mais ne les affiche pas. C'est une fonctionnalité très usitée dans le "massivement online", où plusieurs logiciels clients se connectent sur le même serveur et doivent y trouver la même simulation. Python est là encore tout à fait adapté au développement d'une application "server-side". Cette fonctionnalité est disponible sous Unreal engine, en C++ seulement, et sous Unity3D en C# seulement. Les environnements logiciels mettant en oeuvre le procédé de liaison selon l'invention ouvrent cette fonctionnalité au C++/Python/Lua/C#.

### Ordinateurs ou smartphones

Le procédé de liaison ou binding selon l'invention est particulièrement adapté pour une application performante et compacte sur ordinateur de bureau ou smartphone/embarqué, tout en offrant le maximum d'accessibilité aux développeurs via le Binding & *Lua.*
a. Ordinateur de bureau
   Application métier rapide, compacte, avec un besoin d'interopérabilité modéré
b. Smartphone
   Application métier rapide, compacte, avec un fort besoin d'imagerie 3D temps réel

### Web Client Side

Il s'agit là d'un développement récent pour des applications web "client-side" (exécutée par le navigateur ou *browser).* Le développement d'une application métier 100% en C++ ouvre une première porte vers la cible WebAssembly/WebGL. La machine virtuelle *Lua,* extrêmement compacte (12000 lignes de C), offre une deuxième passerelle.

La compilation du C++ en WebAssembly est une technologie très récente. Il s'agit d'un langage Assembleur pour une cible CPU virtuelle. Le consensus sur les spécifications d'une plateforme commune aux navigateurs web principaux (Firefox, Apple, Google, Microsoft) a tout juste été validé en mars 2017.

Par la compacité et la portabilité de son code source C++, le procédé de liaison selon l'invention et sa mise en oeuvre pour la transformation de modèles constituent une technologie idéale pour fonctionner en WebAssembly. L'enjeu majeur est la taille du binaire. A ce jour, le binaire WASM d'une bibliothèque C/C++ utilisée avec le procédé de liaison selon l'invention représente 5 MegaOctets. A titre d'exemple, celui d'UnrealEngine représente 35 MegaOctets. En WebAssembly, Unity3D doit se limiter à un sous ensemble des fonctionnalités présentes en C#.

Bien sûr, l'invention n'est pas limitée aux exemples qui viennent d'être décrits et de nombreux aménagements peuvent être apportés à ces exemples sans sortir du cadre de l'invention. Bien entendu, les différentes caractéristiques, formes, variantes et modes de réalisation de l'invention peuvent être associées les unes avec les autres selon diverses combinaisons dans la mesure où elles ne sont pas incompatibles ou exclusives les unes des autres. En particulier toutes les variantes et modes de réalisation décrits précédemment sont combinables entre eux.

## Revendications

1. Procédé pour générer une liaison entre une bibliothèque C/C++ (A) et un environnement logiciel d'un ou plusieurs langages interprétés haut niveau, en vue d'exposer les fonctionnalités de ladite bibliothèque C/C++ audit langage interprété, comprenant les étapes suivantes, implémentées par ordinateur :
- une étape pour traiter une définition de la liaison (C) entre la bibliothèque C/C++ (A) et un environnement logiciel des un ou plusieurs langages interprétés haut niveau , ladite définition ayant été préalablement écrite en langage haut niveau et comprenant une liste de fonctions ainsi que leurs paramètres attendus, et les valeurs retournées, de façon à produire des éléments de liaison, cette étape comprenant une répartition du traitement entre :
- des fonctionnalités de chacun du ou desdits langage haut-niveau [B],
- des fonctionnalités du langage C++ qui sont supportées de façon transparente par la liaison et seront rendues accessibles dans le langage haut-niveau.
- une étape pour rassembler lesdits éléments de liaison vers chacun du ou desdits langages haut niveau, de façon à produire un code C++ (D) de liaison,
- une étape pour compiler ledit code C++ (D) et le relier à ladite bibliothèque C/C++ (A).
ce procédé étant mis en oeuvre dans une transformation d'un modèle 3D provenant de la bibliothèque C/C++ (A) en vue d'être embarquable dans une interface humain-machine d'un équipement, dans laquelle une application dite de métier est écrite dans un langage haut niveau (B) en important une bibliothèque dynamique (E) et en accédant à travers ladite bibliothèque dynamique (E) aux fonctionnalités de ladite bibliothèque C/C++ (A).

2. Procédé selon la revendication 1, **caractérisé en ce que** la définition de la liaison est écrite sous la forme d'un programme en langage haut niveau en utilisant une interface de programmationd'application, API, décrivant l'API de la bibliothèque (A) telle qu'elle doit être exposée à des développeurs dudit langage haut niveau.

3. Procédé selon l'une quelconque des revendications précédentes, **caractérisé en ce qu'**il comprend en outre une étape pour traiter une documentation attachée à la bibliothèque C/C++ (A) comme un langage haut niveau cible (B2) et générer un fichier XML.

4. Procédé selon la revendication précédente, **caractérisé en ce qu'**il comprend en outre, à la suite de l'étape de compilation, une obtention d'une bibliothèque dynamique (E) intégrant la bibliothèque C/C++ (A) et une couche d'interface compilée à partir du code C++ (A) issu de l'étape de compilation.

5. Procédé selon la revendication précédente, **caractérisé en ce qu'**il comprend en outre, à la suite de l'étape de compilation, une obtention d'une bibliothèque statique (E) prévue pour embarquer le ou les langages interprétés haut niveau directement dans le code C++ issu de l'état de compilation.

6. Module informatique implémentant le procédé de liaison selon l'une quelconque des revendications précédentes, opérant avec une bibliothèque C/C++ (A) et un ou plusieurs langages interprétés haut niveau, en vue d'exposer les fonctionnalités de ladite bibliothèque C/C++ audit langage interprété, comprenant:
- des moyens pour traiter une définition de la liaison, préalablement écrite en langage haut niveau et comprenant une liste de fonctions, de façon à produire des éléments de liaison,- des moyens pour rassembler lesdits éléments de binding vers chacun du ou desdits langages haut niveau, de façon à produire un code C++ (D) de binding,
- des moyens pour compiler ledit code C++ (D) et le relier à ladite bibliothèque C/C++ (A),
- des moyens pour générer une liste des éléments de liaison exposés vers des langages haut niveau, de façon à produire un jeu de fonctions en C++ qui sont exposées vers le ou les langages de haut niveau,
**caractérisé en ce que** les moyens de traitement de définition sont agencés pour répartir le traitement entre :
- des fonctionnalités de chacun du ou desdits langage haut-niveau [B],
- des fonctionnalités du langage C++ qui sont supportées de façon transparente par la liaison et seront rendues accessibles dans le langage haut-niveau.
ce module étant en outre prévu pour implémenter ledit procédé de liaison dans une transformation d'un modèle 3D provenant de la bibliothèque C/C++ (A) en vue d'être embarquable dans une interface humain-machine d'un équipement, dans laquelle une application dite de métier est écrite dans un langage haut niveau (B) en important une bibliothèque dynamique (E) et en accédant à travers ladite bibliothèque dynamique (E) aux fonctionnalités de ladite bibliothèque C/C++ (A).

7. Mise en oeuvre du procédé de liaison, selon la revendication l'une des revendications 1 à 5, pour la transformation de modèles 3D provenant d'une bibliothèque C/C++ (A) en des modèles 3D adaptés pour être embarqués dans des équipements au sein de systèmes de mobilité.

## Patentansprüche

1. Verfahren zum Generieren einer Verbindung zwischen einer C/C++-Bibliothek (A) und einer Softwareumgebung einer oder mehrerer höherer Interpretersprachen, mit dem Ziel, die Funktionalitäten der C/C++-Bibliothek der Interpretersprache darzulegen, umfassend die folgenden Schritte, die durch einen Rechner implementiert werden:
- einen Schritt zum Verarbeiten einer Definition der Verbindung (C) zwischen der C/C++-Bibliothek (A) und einer Softwareumgebung der einen oder der mehreren höheren Interpretersprachen, wobei die Definition zuvor in einer höheren Sprache geschrieben wurde und eine Liste von Funktionen sowie ihrer erwarteten Parameter und die zurückgegebenen Werte umfasst, um Verbindungselemente zu erzeugen, dieser Schritt umfassend eine Verteilung der Verarbeitung zwischen:
- Funktionalitäten jeder der höheren Sprache(n) [B],
- Funktionen der C++-Sprache, die durch die Verbindung transparent unterstützt werden und in der höheren Sprache zugänglich gemacht werden.
- einen Schritt zum Zusammenführen der Verbindungselemente zu jeder der höheren Sprache(n), um einen C++-Verbindungscode (D) zu erzeugen,
- einen Schritt zum Kompilieren des C++-Codes (D) und zum Verbinden mit der C/C++-Bibliothek (A).
wobei dieses Verfahren in einer Umwandlung eines 3D-Modells implementiert wird, das aus der C/C++-Bibliothek (A) stammt, mit dem Ziel, in eine Mensch-Maschine-Schnittstelle einer Ausrüstung, in der eine sogenannte Geschäftsanwendung in einer höheren Sprache (B) geschrieben ist, durch Importieren einer dynamischen Bibliothek (E) und Zugreifen über die dynamische Bibliothek (E) auf die Funktionalitäten der C/C++-Bibliothek (A) einbettbar zu sein.

2. Verfahren nach Anspruch 1, **dadurch gekennzeichnet, dass** die Definition der Verbindung in der Form eines Programms in höherer Sprache unter Verwendung einer Anwendungsprogrammierschnittstelle, API, geschrieben wird, wobei die API (A) der Bibliothek so beschrieben wird, wie sie Entwicklern der höheren Sprache dargelegt werden soll.

3. Verfahren nach einem der vorstehenden Ansprüche,
**dadurch gekennzeichnet, dass** es ferner einen Schritt zum Verarbeiten einer Dokumentation, die an die C/C++-Bibliothek (A) angehängt ist, als eine höhere Zielsprache (B2) und zum Generieren einer XML-Datei umfasst.

4. Verfahren nach dem vorstehenden Anspruch,
**dadurch gekennzeichnet, dass** es ferner nach dem Kompilierungsschritt einen Erhalt einer dynamischen Bibliothek (E), die die C/C++-Bibliothek (A) integriert, und einer Schnittstellenschicht umfasst, die aus dem C++-Code (A) kompiliert wird, der sich aus dem Kompilierungsschritt ergibt.

5. Verfahren nach dem vorstehenden Anspruch,
**dadurch gekennzeichnet, dass** es ferner nach dem Kompilierungsschritt einen Erhalt einer statischen Bibliothek (E) umfasst, die zum Einbetten der höheren Interpretersprache(n) direkt in den C++-Code vorgesehen ist, der sich aus dem Kompilierungszustand ergibt.

6. Computermodul, das das Verbindungsverfahren nach einem der vorstehenden Ansprüche implementiert, das mit einer C/C++-Bibliothek (A) und einer oder mehreren höheren Interpretersprachen arbeitet, mit dem Ziel, die Funktionalitäten der C/C++-Bibliothek der Interpretersprache darzulegen, umfassend:
- Mittel zum Verarbeiten einer Definition der Verbindung, die zuvor in einer höheren Sprache geschrieben wurde und eine Liste von Funktionen umfasst, um Verbindungselemente zu erzeugen,- Mittel zum Sammeln der Verbindungselemente für jede der höheren Sprache(n), um einen C++-Binding-Code (D) zu erzeugen,
- Mittel zum Kompilieren des C++-Codes (D) und zum Verbinden mit der C/C++-Bibliothek (A),
- Mittel zum Erzeugen einer Liste von Verbindungselementen, die höheren Sprachen dargelegt werden, um eine Reihe von Funktionen in C++ zu erzeugen, die der höheren Sprache(n) dargelegt werden,
**dadurch gekennzeichnet, dass** die Definitionsverarbeitungsmittel zum Verteilen der Verarbeitung angeordnet sind zwischen:
- Funktionalitäten jeder der höheren Sprache(n) [B],
- Funktionen der C++-Sprache, die durch die Verbindung transparent unterstützt werden und in der höheren Sprache zugänglich gemacht werden.
wobei dieses Modul ferner zum Implementieren des Verbindungsverfahrens in einer Umwandlung eines 3D-Modells vorgesehen ist, das aus der C/C++-Bibliothek (A) stammt, mit dem Ziel, in eine Mensch-Maschine-Schnittstelle einer Ausrüstung, in der eine sogenannte Geschäftsanwendung in einer höheren Sprache (B) geschrieben ist, durch Importieren einer dynamischen Bibliothek (E) und Zugreifen über die dynamische Bibliothek (E) auf die Funktionalitäten der C/C++-Bibliothek (A) einbettbar zu sein.

7. Implementieren des Verbindungsverfahrens nach einem der Ansprüche 1 bis 5 für die Umwandlung von 3D-Modellen, die aus einer C/C++-Bibliothek (A) stammen, in 3D-Modelle, die zum Eingebettetwerden in Ausrüstungen innerhalb von Mobilitätssystemen angepasst sind.

## Claims

1. Method for generating a binding between a C/C++ library (A) and a software environment of one or more high-level interpreted languages, in order to expose the functionalities of said C/C++ library to said interpreted language, comprising the following computer-implemented steps:
- a step of processing a definition of the binding (C) between the C/C++ library (A) and a software environment of the one or more high-level interpreted languages, said definition having been previously written in high-level language and comprising a list of functions as well as the expected parameters thereof, and the returned values, so as to produce binding elements, this step comprising a distribution of the processing between:
- functionalities of each of said high-level language(s) [B],
- functionalities of the C++ language that are transparently supported by the binding and will be made accessible in the high-level language.
- a step of gathering said binding elements towards each of said high-level language(s), so as to produce a C++ binding code (D),
- a step of compiling said C++ code (D) and linking it to said C/C++ library (A).
this method being implemented in a transformation of a 3D model from the C/C++ library (A) in order to be embeddable in a human-machine interface of a device, wherein a so-called business application is written in a high-level language (B) by importing a dynamic library (E) and accessing, through said dynamic library (E), the functionalities of said C/C++ library (A).

2. Method according to claim 1, **characterized in that** the definition of the binding is written in the form of a high-level language program using an application programming interface, API, describing the API of the library (A) as it is to be exposed to developers of said high-level language.

3. Method according to any of the preceding claims, **characterized in that** it further comprises a step of processing documentation attached to the C/C++ library (A) as a target high-level language (B2) and generating an XML file.

4. Method according to the preceding claim, **characterized in that** it further comprises, following the compilation step, obtaining a dynamic library (E) integrating the C/C++ library (A) and an interface layer compiled from the C++ code (A) resulting from the compilation step.

5. Method according to the preceding claim, **characterized in that** it further comprises, following the compilation step, obtaining a static library (E) intended for embedding the high-level interpreted language(s) directly in the C++ code resulting from the compilation state.

6. Computer module implementing the binding method according to any of the preceding claims, operating with a C/C++ library (A) and one or more high-level interpreted languages, in order to expose the functionalities of said C/C++ library to said interpreted language, comprising:
- means for processing a definition of the binding, previously written in high-level language and comprising a list of functions, so as to produce binding elements,- means for gathering said binding elements towards each of said high-level language(s), so as to produce a C++ binding code (D),
- means for compiling said C++ code (D) and linking it to said C/C++ library (A),
- means for generating a list of binding elements exposed to high-level languages, so as to produce a set of C++ functions that are exposed to the high-level language(s),
**characterized in that** the definition processing means are arranged to distribute the processing between:
- functionalities of each of said high-level language(s) [B],
- functionalities of the C++ language that are transparently supported by the binding and will be made accessible in the high-level language.
this module being further intended to implement said binding method in a transformation of a 3D model from the C/C++ library (A) in order to be embeddable in a human-machine interface of a device, wherein a so-called business application is written in a high-level language (B) by importing a dynamic library (E) and accessing, through said dynamic library (E), the functionalities of said C/C++ library (A).

7. Implementation of the binding method, according to any of claims 1 to 5, for transforming 3D models from a C/C++ library (A) into 3D models suitable for being embedded in devices within mobility systems.
